Europäisches Patentamt

European Patent Office

Office européen des brevets

(19)

(11) **EP 0 718 620 A1**

(12) **EUROPÄISCHE PATENTANMELDUNG**

(43) Veröffentlichungstag:
26.06.1996 Patentblatt 1996/26

(51) Int. Cl.⁶: **G01N 21/47**, A61B 5/00

(21) Anmeldenummer: 95119424.0

(22) Anmeldetag: 09.12.1995

(84) Benannte Vertragsstaaten:
**DE ES FR GB IT**

(30) Priorität: **21.12.1994 DE 4445683**

(71) Anmelder: **BOEHRINGER MANNHEIM GMBH**
**D-68298 Mannheim (DE)**

(72) Erfinder:
• **Essenpreis, Matthias, Dr.**
**D-82131 Gauting (DE)**

• **Haar, Hans-Peter, Dr.**
**D-69168 Wiesloch (DE)**
• **Boecker, Dirk, Dr.Dr.**
**D-69115 Heidelberg (DE)**
• **Knuettel, Alexander**
**D-69469 Weinheim (DE)**

(74) Vertreter: **Pfeifer, Hans-Peter, Dr.,**
**Dr. H.-P. Pfeifer  Dr. P. Jany,**
**Patentanwälte**
**Beiertheimer Allee 19**
**76137 Karlsruhe (DE)**

(54) **Verfahren zur Untersuchung eines streuenden Mediums mit intensitätsmoduliertem  Licht**

(57)    Verfahren zur Untersuchung eines streuenden Mediums, insbesondere einer biologischen Matrix, mit intensitätsmoduliertem Licht.

Um bei einem solchen Frequenzdomänen-Meßverfahren den elektronischen Aufwand ohne Einschränkung der Meßgenauigkeit zu reduzieren, wird ein Verfahren vorgeschlagen, bei welchem zur Untersuchung eines streuenden Mediums, insbesondere einer biologischen Matrix, mit intensitätsmoduliertem Licht, von einem Frequenzgenerator (18) eine hochfrequentes Modulationssignal erzeugt, die Intensität eines Lichtsenders (10) mit dem Modulationssignal moduliert und das von dem Lichtsender (10) ausgehende Licht in das Medium eingestrahlt wird, das Modulationssignal Frequenz-Chirps einschließt, während deren die Modulationsfrequenz von einer Anfangsfrequenz zu einer Endfrequenz durchgestimmt wird, das Modulationssignal von dem Frequenzgenerator (18) auf mindestens zwei verschiedenen Signalwegen (23A, 24) einem Signalmischer (31) zugeführt wird, so daß sich während eines Frequenz-Chirp die Eingangssignale des Signalmischers (31) um eine Differenzfrequenz unterscheiden, deren Größe von dem Unterschied der Signallaufzeiten auf den mindestens zwei Signalwegen (23A, 24) und der Geschwindigkeit der Änderung der Modulationsfrequenz abhängt, wobei mindestens einer der Signalwege als Meßsignalweg (23A) einen durch das Medium verlaufenden Lichtwegabschnitt (20A) einschließt, und das Ausgangssignal des Signalmischers (31) zu einer Information über das streuende Medium weiterverarbeitet wird.

Fig. 2

EP 0 718 620 A1

**Beschreibung**

Die Erfindung betrifft ein Verfahren zur Untersuchung eines streuenden Mediums, insbesondere einer biologischen Matrix, mit intensitätsmoduliertem Licht.

Bei solchen Verfahren wird Licht an einem Einstrahlungsort als Primärlicht in das Medium eingestrahlt und an einem Detektionsort, welcher sich in einem bestimmten Meßabstand von dem Einstrahlungsort befindet, aus dem streuenden Medium austretendes Licht als Sekundärlicht detektiert, d.h. von einem als Lichtempfänger dienenden photoelektrischen Wandler in ein elektrisches Meßsignal umgewandelt. Durch Vergleich des eingestrahlten Primärlichts und des detektierten Sekundärlichts wird eine Meßgröße bestimmt, deren Meßwert von der Wechselwirkung des Lichts mit dem streuenden Medium abhängig ist und dadurch ein Maß für das gewünschte Untersuchungsergebnis darstellt. Eine solche Meßgröße wird vielfach als für das Untersuchungsergebnis charakteristischer quantifizierbarer Parameter (quantifiable parameter) bezeichnet.

Die Erfindung bezieht sich dabei auf Fälle, bei denen eine Vielfachstreuung des Lichts zwischen Einstrahlungsort und Detektionsort stattfindet. Dies bedeutet, daß die Streuzentren in dem streuenden Medium so dicht sind, daß die mittlere freie Weglänge von Photonen in dem Medium sehr viel kürzer ist als der Lichtweg zwischen Einstrahlungsort und Detektionsort, so daß das Licht auf seinem Weg zwischen beiden Orten viele Male (mindestens 10, bevorzugt mindestens 100 Mal) gestreut wird.

Ein besonderes wichtiges Anwendungsgebiet der Erfindung ist die Untersuchung einer biologischen Matrix. Eine biologische Matrix in diesem Sinne ist eine Körperflüssigkeit (insbesondere Blut) oder ein Gewebe eines lebenden Organismus, wobei sich sowohl im biologischen Gewebe, insbesondere Hautgewebe, als auch in typischen Körperflüssigkeiten so viele Streuzentren befinden, daß schon bei einem geringen Meßabstand Vielfachstreuung eintritt.

Von besonderer Bedeutung sind dabei Analyseverfahren, bei denen die Konzentration eines Analyten bestimmt werden soll und der Parameter eine Meßgröße darstellt, die zur Ermittlung der gewünschten Konzentration erforderlich ist. Solche Analyseverfahren haben eine sehr große medizinische Bedeutung, weil sie es ermöglichen, Konzentrationen bestimmter Analyten unmittelbar im Gewebe, also ohne vorherige Blutentnahme "in-vivo" zu bestimmen. Nachfolgend wird ohne Beschränkung der Allgemeinheit auf biologische Matrices, insbesondere Gewebe, als Beispiel für ein streuendes Medium im Sinne der Erfindung Bezug genommen.

Die Wellenlängen des Lichts, die speziell für Messungen an biologischen Matrices diskutiert werden, liegen allgemein zwischen etwa 300 nm und mehreren tausend nm, also im Spektralbereich zwischen dem nahen UV und infrarotem Licht. Der Begriff "Licht" darf nicht als Einschränkung auf den sichtbaren Spektralbereich verstanden werden.

Die Erfindung bezieht sich speziell auf Verfahren, bei denen das Primärlicht nicht statisch mit konstanter Intensität in das streuende Medium eingestrahlt wird, sondern bei denen es mit einem Modulationssignal, dessen Frequenz üblicherweise im Radiofrequenzbereich oberhalb 100 MHz liegt, amplitudenmoduliert wird. Dadurch breiten sich in der biologischen Matrix Lichtintensitätswellen aus, deren Wellenlänge dem Quotient aus der Phasengeschwindigkeit der Lichtintensitätswelle in der biologischen Matrix und der Modulationsfrequenz entspricht.

Solche Verfahren werden als Frequenzdomänen (frequency domain)-Messungen bezeichnet. Die Frequenzdomänen-Meßtechnik (nachfolgend "FD-Technik") erlaubt die Bestimmung von zwei Typen von Parametern ("FD-Parametern").

Zum einen kann die Wechselstromamplitude (AC-amplitude) und/oder die Gleichstromamplitude (DC-amplitude) des detektierten Sekundärlichts im Vergleich zu dem eingestrahlten Primärlicht bestimmt werden. Diese beiden Parameter beschreiben die Änderung der Intensität des Lichts durch Wechselwirkung mit der biologischen Matrix und werden deswegen zusammenfassend als Intensitäts-Parameter bezeichnet.

Zum zweiten ist es möglich, die Phasenverschiebung des Lichts in dem Medium zu bestimmen. Diese Phasenverschiebung resultiert aus der Laufzeit des Lichts zwischen dem Einstrahlungsort und dem Detektionsort in der biologischen Matrix. Die Laufzeit dt ist unmittelbar linear mit der Phasenverschiebung $d\Phi$ verknüpft ($dt = d\Phi/\Omega$, wobei $\Omega$ die Modulationsfrequenz des Primärlichts ist). Die Phasenverschiebung ist also ein Laufzeit-Parameter. Allgemein ist als Laufzeit-Parameter im Sinne der vorliegenden Erfindung jeder quantifizierbare Parameter des Lichts anzusehen, der mit der Laufzeit korreliert, d.h. ein eindeutiges Maß für die Laufzeit des Lichts zwischen Einstrahlungsort und Detektionsort in dem streuenden Medium darstellt.

Die Parameter werden, wie erwähnt, jeweils an dem detektierten Sekundärlicht in Relation zu dem eingestrahlten Primärlicht bestimmt. Nachfolgend werden die Kurzzeichen AC, DC und P für die drei erwähnten Parameter Wechselstromamplitude, Gleichstromamplitude und Phasenverschiebung verwendet.

Die Anwendung der FD-Technik zur Bestimmung eines Parameters des Lichtes als Meßgröße zur analytischen Bestimmung der Konzentration eines Analyten in einer biologischen Matrix wurde bisher hauptsächlich im Zusammenhang mit der zeitaufgelösten Spektroskopie (FD-Spektroskopie) diskutiert. Es geht dabei um eine Lösung für ein grundlegendes Problem bei der Spektroskopie streuender Medien, nämlich die Unkenntnis über die optische Weglänge. Deren Kenntnis ist jedoch erforderlich, um die mit spektroskopischen Methoden gemessenen Absorptionsspektren quantifizieren und die Konzentration eines absorbierenden Stoffes berechnen zu können. In einem nichtstreuenden Medium entspricht die optische Weglänge der Küvettenlänge. In einem streuenden Medium ist sie durch die Vielzahl der Streuvorgänge statistisch verteilt. Mittels der FD-Spektroskopie ist es möglich, die statistisch verteilte, mittlere freie Weglänge in dem streuenden Medium zu messen und dem jeweiligen Absorptionswert zuzuordnen.

Derartige Verfahren sind beispielsweise aus den nachfolgenden Publikationen bekannt.

J.R. Lackowicz: "Gigahertz Frequency-Domain Fluorometry: Resolution of Complex Intensity Decays, Picosecond Processes and Future Developments", Photon Migration in Tissues, Academic Press/New York, Edited by Britton Chance, pp. 169-186, 1989.

B. Chance et al.: "Time-resolved spectroscopy of hemoglobin ...", Analytical Biochemistry, 174 (1988) p. 698 to 707

US-Patente 5,972,331 - 5,119,815 - 5,122,974 - 5,167,230

A. Duncan et al.

"A multiwavelength, wide band, intensity modulated optical spectrometer for near infrared spectroscopy and imaging", Proc. SPIE 1888 (1993), 248-257.

Die in diesen Publikationen gegebenen Beispiele beziehen sich auf die Analyse stark absorbierender Substanzen mit Pigmenteigenschaften, insbesondere den roten Blutfarbstoff Hämoglobin.

In der früher angemeldeten, jedoch nicht vorveröffentlichten internationalen Patentanmeldung PCT/DE 94/01290 ist ein Verfahren zur Bestimmung der Konzentration von Glucose in einer biologischen Matrix beschrieben, bei dem mittels einer FD-Meßtechnik ein Laufzeit-Parameter des Lichts innerhalb der biologischen Matrix als eine mit der Glucose-Konzentration korrelierende Meßgröße gemessen wird. Das der Analyse zugrundeliegende Prinzip unterscheidet sich dabei grundsätzlich von den vorstehend diskutierten spektroskopischen Analysen. Die optische Absorption von Glucose ist in dem betreffenden Wellenlängenbereich so gering, daß sie analytisch praktisch nicht genutzt werden kann. Die Analyse basiert hier vielmehr darauf, daß die mittlere optische Weglänge von Photonen innerhalb der heterogenen biologischen Matrix in überraschend starkem Maße von der Glucose-Konzentration beeinflußt wird. Demzufolge ist der mittlere optische Weg ein unmittelbares Maß für die Glucose-Konzentration. Die Messung bei mehreren unterschiedlichen Wellenlängen, wie sie für spektroskopische Messungen gebräuchlich ist, ist bei diesem Prinzip nicht erforderlich.

Informationen über die FD-Parameter können auch für bildgebende Verfahren, beispielsweise Brustuntersuchungen auf Tumore, verwendet werden. Voraussetzung ist dabei, daß das zu untersuchende Volumen von dem Primärlichtstrahl abgetastet wird, das heißt es ist ein "Scan" des Primärlichtes über die Oberfläche des zu untersuchenden Gewebes erforderlich. Die dabei aus dem Sekundärlicht gewonnenen Informationen über Phasenverschiebung und Intensität können in eine Bildinformation weiter verarbeitet werden, wie dies in der Publikation M. Kaschke et al.: "Transillumination Imaging of Tissue by Phase Modulation Techniques", OEA Proceedings on Advances in Optical Imaging and Phonon Migration, 21 (1994), 88-92, beschrieben ist.

Bei den vorbekannten FD-Verfahren wird zur Messung der Phasenverschiebung meist die Heterodyn-Meßtechnik verwendet. Dabei wird neben der Modulationsfrequenz f1, mit der das Primärlicht moduliert wird, eine zweite konstante Frequenz f2 erzeugt, die sich von f1 um eine verhältnismäßig kleine Differenzfrequenz df unterscheidet. Das mit der Frequenz f1 modulierte Meßsignal des Lichtempfängers wird in einem elektronischen Signalmischer mit der Frequenz f2 gemischt und das Ausgangssignal des Mischers wird mit einem schmalbandig frequenzselektiven Meßprinzip, beispielsweise einem Lock-in-Verstärker, gemessen, der auf die Differenzfrequenz df (die auch als "Kreuzkorrelationsfrequenz" bezeichnet wird) abgestimmt ist.

Zur Realisierung dieses Prinzips sind zwei Hochfrequenzgeneratoren (über 100 MHz) für die Frequenzen f1 und f2 erforderlich. An die Stabilität der Oszillatoren werden hohe Anforderungen gestellt, um störende Schwankungen der Kreuzkorrelationsfrequenz (welche bei etwa 100 Hz bis etwa 50 KHz liegt) zu vermeiden. Dies erfordert einen erheblichen elektronischen Aufwand.

Die Erfindung befaßt sich auf dieser Basis mit dem Problem, ein Verfahren zur Untersuchung von biologischen Matrices und anderen ähnlich streuenden Medien mittels der FD-Technik zur Verfügung zu stellen, bei dem ohne Einschränkung der Meßgenauigkeit der elektronische Aufwand im Vergleich zu den bekannten Verfahren vermindert ist.

Die Aufgabe wird gelöst durch ein Verfahren zur Untersuchung eines streuenden Mediums, insbesondere einer biologischen Matrix, mit intensitätsmoduliertem Licht, bei welchem von einem Frequenzgenerator eine hochfrequentes Modulationssignal erzeugt, die Intensität eines Lichtsenders mit dem Modulationssignal moduliert und das von dem Lichtsender ausgehende Licht in das Medium eingestrahlt wird, das Modulationssignal Frequenz-Chirps einschließt, während deren die Modulationsfrequenz von einer Anfangsfrequenz zu einer Endfrequenz durchgestimmt wird, das Modulationssignal von dem Frequenzgenerator auf mindestens zwei verschiedenen Signalwegen einem Signalmischer zugeführt wird, so daß sich während eines Frequenz-Chirp die Eingangssignale des Signalmischers um eine Differenzfrequenz unterscheiden, deren Größe von dem Unterschied der Signallaufzeiten auf den mindestens zwei Signalwegen und der Geschwindigkeit der Änderung der Modulationsfrequenz abhängt, wobei mindestens einer der Signalwege als Meßsignalweg einen durch das Medium verlaufenden Lichtwegabschnitt einschließt, und das Ausgangssignal des Signalmischers zu einer Information über das streuende Medium weiterverarbeitet wird.

Im Regelfall sind die Signallaufzeiten auf den mindestens zwei verschiedenen Signalwegen unterschiedlich, so daß die resultierende Differenzfrequenz ungleich Null ist. Es sind jedoch im Rahmen der Erfindung auch Ausführungsformen möglich, bei denen Betriebszustände mit gleichen Signallaufzeiten (resultierende Differenzfrequenz Null), auf den mindestens zwei verschiedenen Signalwegen auftreten.

Durch das erfindungsgemäße Verfahren ist es möglich, einen FD-Parameter, insbesondere als Meßgröße für die in-vivo-Analytik an menschlichem Gewebe, mit nur einem Frequenzgenerator zu messen, an den darüber hinaus keine besonderen Anforderungen hinsichtlich der Frequenzstabilität gestellt werden müssen. Dadurch ergibt sich ohne Beeinträchtigung der Meßgenauigkeit eine erhebliche Einsparung hinsichtlich des elektronischen Aufwands. Dies ist insbesondere bei solchen Anwendungen wichtig, bei denen - wie beispielsweise bei der laufenden Überwachung des Blutglucosespiegels von Diabetikern - die Analyse mit kleinen, kostengünstigen Geräten möglich sein soll, die dem einzelnen Anwender zur Verfügung gestellt werden können.

Die Erfindung wird nachfolgend anhand von in den Figuren schematisch dargestellten Ausführungsbeispielen näher erläutert. Es zeigen:

Figur 1      eine Prinzipdarstellung zur Erläuterung der Erfindung,

Figur 2      ein Blockdiagramm einer ersten Anordnung zur Durchführung der Erfindung,

Figur 3      ein Blockdiagramm einer zweiten Anordnung zur Durchführung der Erfindung,

Figur 4      ein Blockdiagramm einer dritten Anordnung zur Durchführung der Erfindung.

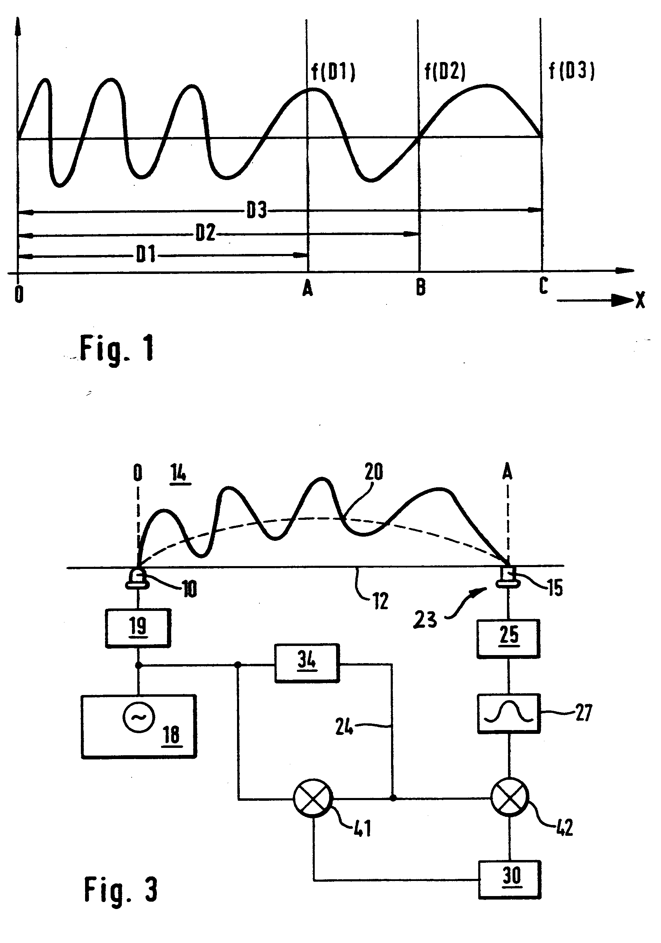

In Figur 1 ist das eindimensionale Ausbreitungsverhalten entlang einer Achse X von Licht, welches von einer an dem Ort 0 angeordneten Lichtquelle ausgeht und mit einer stetig steigenden Modulationsfrequenz moduliert ist, graphisch verdeutlicht. Wenn die Modulationsfrequenz während eines Frequenz-Chirp monoton steigt, werden zu jedem Zeitpunkt innerhalb des Chirp an unterschiedlichen Detektionsorten (A, B, C) entlang der Ausbreitungsrichtung (X-Achse) unterschiedliche Frequenzen gemessen. In Figur 1 ist eine "Momentaufnahme" dargestellt. Während in der Nähe des 0-Punktes (d.h. des Ortes der Lichtquelle) eine hohe Modulationsfrequenz (verdeutlicht durch eine kurze Wellenlänge) gemessen wird, nimmt die Modulationsfrequenz zu größeren Entfernungen hin ständig ab, weil das dort detektierbare Licht bereits zu einem früheren Zeitpunkt, also innerhalb des Chirp mit einer niedrigeren Frequenz, emittiert wurde. Selbstverständlich kommen alle Frequenzen eines Chirp an jedem Detektionsort an, wobei jedoch zu jedem bestimmten Zeitpunkt unterschiedliche Frequenzen an unterschiedlich weit entfernten Detektionsorten gemessen werden. Innerhalb eines Frequenz-Chirp mit steigender Frequenz ist deswegen zu jedem Zeitpunkt die an einem Detektionsort A mit kürzerem Meßabstand D1 gemessene Frequenz höher als die an einem Detektionsort B mit größerem Meßabstand D2 gemessene Frequenz.

Am einfachsten zu realisieren ist ein Frequenz-Chirp, bei dem sich die Frequenz linear ändert, oder mit anderen Worten die Änderungsgeschwindigkeit (steigend oder fallend) zeitlich konstant ist. Unter dieser im Rahmen der Erfindung bevorzugten Voraussetzung, ist der Frequenzunterschied (Differenzfrequenz) zwischen zwei Detektionsorten mit unterschiedlichen Abständen von dem Einstrahlungsort innerhalb eines Frequenz-Chirp zeitlich konstant und proportional zu dem Abstand zwischen den Detektionsorten. Es gilt also die Formel:

$$df = f(D2)\text{-}f(D1) = \delta f/\delta t \cdot (D2\text{-}D1) \cdot 1/v. \qquad (1)$$

Dabei ist df die Differenzfrequenz zwischen zwei Detektionsorten mit den Meßabständen D1 und D2 von dem Einstrahlungsort. $\delta f/\delta t$ ist die Änderungsgeschwindigkeit der Frequenz innerhalb des Chirp und v ist die Ausbreitungsgeschwindigkeit des Lichts in dem Medium (die sich aus der Lichtgeschwindigkeit c und dem Brechungsindex N ergibt gemäß v = c/N ).

Die vorstehenden Überlegungen lassen sich ohne weiteres verallgemeinern: Für eine beliebige Anordnung, bei der ein Signal auf zwei unterschiedlichen Signalwegen mit unterschiedlichen Signallaufzeiten $t_1$ und $t_2$ transportiert wird, ist die Differenzfrequenz df eine Funktion der Laufzeitdifferenz dt und der Geschwindigkeit der Änderung der Modulationsfrequenz in dem Chirp:

$$df = f(\delta f/\delta t, dt) \qquad (2)$$

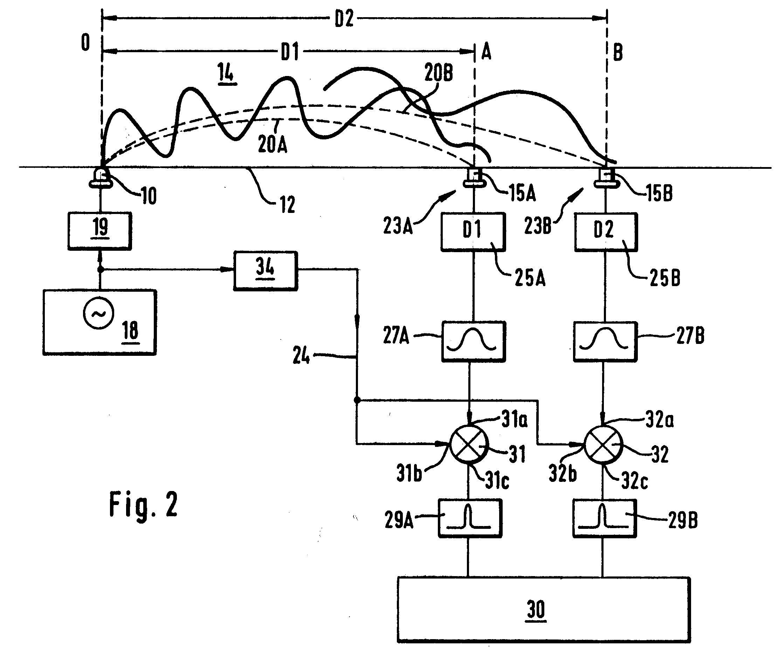

Figur 2 zeigt eine erste Möglichkeit zur Realisierung der Erfindung. Ein Lichtsender 10, beispielsweise eine Leuchtdiode, strahlt an einem Einstrahlungsort O Primärlicht durch eine Grenzfläche 12 in eine biologische Matrix 14 ein. Bevorzugt ist die biologische Matrix 14 Hautgewebe und die Grenzfläche 12 wird von der Oberfläche der Haut gebildet. Das aus der biologischen Matrix 14 austretende Licht wird an zwei Detektionsorten A und B, die in unterschiedlichen Meßabständen D1 und D2 von dem Einstrahlungsort O angeordnet sind, detektiert.

Als Detektoren 15A, 15B dienen photoelektrische Wandler wie beispielsweise Photomultiplier oder Photodioden, insbesondere Avalanche-Photodioden. Anordnung und Realisierung der optischen Elemente sind konventionell. Insoweit kann beispielsweise auf die einleitend erwähnten Literaturstellen verwiesen werden. Insbesondere können Lichtsender und Detektoren entweder unmittelbar an der Grenzfläche 12 angeordnet sein oder mit Hilfe von Lichtleitfasern kann eine Verbindung zu weiter entfernten lichtoptischen Elementen hergestellt werden.

Der Lichtsender 10 wird mit Hilfe eines Frequenzgenerators 18 und einer Verstärkerschaltung 19 mit einer Speisespannung versorgt, die entsprechend der Frequenz des Frequenzgenerators 18 moduliert ist. Das von dem Frequenzgenerator 18 erzeugte Modulationssignal besteht aus Frequenz-Chirps im Radiofrequenzbereich (RF-Chirps), innerhalb denen die Modulationsfrequenz mit konstanter Änderungsgeschwindigkeit (rampenförmig) steigt oder fällt. Die Bandbreite eines Frequenz-Chirp (d.h. die Differenz zwischen Anfangsfrequenz und Endfrequenz) sollte mindestens 10 MHz und höchstens 300 MHz betragen. Insgesamt können Modulationsfrequenzen in einem sehr breiten Fenster des Frequenzspektrums eingesetzt werden. Bevorzugt sollte die Modulationsfrequenz innerhalb der Grenzen 50 MHz (als niedrigste Frequenz) und 1000 MHz (als höchste Frequenz) liegen.

Das in die biologische Matrix 14 eingestrahlte Licht erreicht auf symbolisch dargestellten Lichtwegen die unterschiedlichen Detektionsorte A, B. Der Abschnitt des Signalweges vom Eintritt des Lichts an dem Eintrittsort O bis zu dessen Austritt an den Austrittsorten A, B wird als durch das Medium verlaufender Lichtwegabschnitt 20A, 20B (nachfolgend auch abgekürzt "Meßlichtwegabschnitt") bezeichnet Der Unterschied der Signallaufzeiten auf den Meßlichtwegabschnitten 20A, 20B entspricht den Abständen D1, D2 der Meßorte von dem Einstrahlungsort O. Das an dem Detektionsorten A, B austretende Licht wird von den Detektoren 15A, 15B in elektrische Signale umgewandelt, in Verstärkern 25A, 25B verstärkt und in relativ breitbandigen Bandpaßfiltern 27A, 27B gefiltert. Der Durchlaßbereich der Bandpaßfilter ist auf die Bandbreite des Frequenz-Chirp abgestimmt, d.h. sie sperren unterhalb der niedrigsten und oberhalb der höchsten Frequenz des Frequenz-Chirp.

Danach werden die Signale jeweils einem ersten Eingang 31a, 32a eines ersten Signalmischers 31 und eines zweiten Signalmischers 32 zugeführt. Die Signalwege des Modulationssignals von dem Frequenzgenerator 18 zu dem Lichtsender 10, von dort über die Meßlichtwegabschnitte 20A, 20B zu den Detektoren 15A, 15B und weiter bis zu den Eingängen 31a, 31b der Signalmischer 31, 32 werden insgesamt als Meßsignalwege 23A, 23B bezeichnet.

An dem jeweils zweiten Eingang 31b, 32b der Mischer 31, 32 liegt ein Referenzsignal an, welches den Mischern 31, 32 über einen Referenzsignalweg 24 von dem Frequenzgenerator 18 zugeführt wird. Ein Referenzsignalweg im Sinne der vorliegenden Erfindung ist stets ein Signalweg, der von dem gleichen Frequenzgenerator zu dem gleichen Mischer wie ein Meßsignalweg führt, jedoch keinen durch das Medium verlaufenden Lichtwegabschnitt einschließt.

Die Ausgangssignale der Mischer 31, 32 an den Ausgängen 31c und 32c werden über schmalbandige Bandpaß-Filter 29A und 29B einer Meß- und Auswerteeinheit 30 zugeführt.

Die Signalübertragung auf den elektrischen Signalwegabschnitten der Meßsignalwege 23A, 23B zwischen dem Frequenzgenerator 18 und dem Lichtsender 10 sowie zwischen den Empfängern 15A, 15B und den Mischern 31, 32 erfolgt nahezu verzögerungsfrei. Dagegen breitet sich das Licht auf den Meßlichtwegabschnitten 20A, 20B, aufgrund des höheren Brechungsindex und vor allem wegen der Streuung erheblich langsamer aus. Für eine effektive Ausbreitungsgeschwindigkeit von $c/10 = 3 \times 10^{10}$ mm/s resultiert eine Verzögerung von $3 \times 10^{-10}$ Sekunden je 10 mm Abstand zwischen dem Einstrahlungsort und dem Detektionsort. Bei einer Änderungsgeschwindigkeit der Frequenz innerhalb des Frequenz-Chirp von $\delta f/\delta t = 100$ MHz/ms entspricht dies einer Frequenzverschiebung von ca. 30 Hz. Entsprechend beträgt die Differenzfrequenz zwischen den an den Meßorten A und B detektierten Signalen 30 Hz, wenn sich die Meßabstände D1, D2 um 10 mm unterscheiden.

Bei der Erfindung sind mindestens zwei unterschiedliche Signalwege vorhanden, die den gleichen Frequenzgenerator mit zwei Eingängen eines Signalmischers verbinden, wobei aus dem Unterschied der Signallaufzeiten in Verbindung mit der Änderung der Modulationsfrequenz innerhalb des Frequenz-Chirp eine Differenzfrequenz zwischen den Eingängen des Signalmischers resultiert, deren Betrag eine Funktion der Änderungsgeschwindigkeit $\delta f/\delta t$ und des Unterschieds der Signallaufzeiten ist. Bei der Ausführungsform gemäß Figur 2 sind zwei Meßsignalwege 23A und 23B mit unterschiedlichen Meßlichtwegabschnitten 20A, 20B und ein Referenzsignalweg 24 ohne Meßlichtwegabschnitt vorhanden. Jeder dieser Signalwege hat eine unterschiedliche Signallaufzeit. An den Eingängen 31a, 31b, 32a, 32b der Frequenzmischer 31, 32, liegt ein über einen Meßsignalweg übertragenes Meßsignal oder ein über den Referenzsignalweg übertragenes Referenzsignal an.

Die durch den Frequenz-Chirp in Verbindung mit der Signalverzögerung bedingte Differenzfrequenz an den Eingängen des Signalmischers kann dabei jeweils zur Abwärtskonvertierung der hochfrequenten Eingangssignale auf eine bequem meßbare Differenzfrequenz verwendet werden, die vorzugsweise zwischen etwa 1 kHz und 30 kHz liegen sollte. Die Differenzfrequenz, die bei einer technisch realisierbaren Änderungsgeschwindigkeit und verhältnismäßig geringen Meßabständen resultiert, ist - wie die obige Beispielrechnung zeigt - erheblich niedriger.

Bei der Ausführungsform gemäß Fig. 2 ist deshalb in dem Referenzsignalweg 24 eine Verzögerungsstrecke 34 vorgesehen. Dadurch wird der Laufzeitunterschied zwischen den über die Meßsignalwege 23A, 23B an die ersten Eingänge 31a, 32a der Mischer 31, 32 übertragenen Meßsignalen und dem über den Referenzsignalweg 24 an die zweiten Eingänge 31b, 32b der Mischer 31, 32 übertragenen Referenzsignal so weit vergrößert, daß die resultierende Differenzfrequenz eine bequeme Auswertung des aus der Mischung resultierenden Kreuzkorrelationssignals mit Hilfe üblicher frequenzselektiver Verstärkungstechniken ermöglicht. Um eine Differenzfrequenz in der Größenordnung von 1 kHz zu gewährleisten, muß die Verzögerungszeit bei einer Änderungsgeschwindigkeit des Frequenz-Chirps von $\delta f/\delta t = 100$ MHz/ms etwa 10 ns betragen. Eine solche Verzögerungszeit läßt sich mit hoher Konstanz mittels einer akusto-optischen Verzögerungsstrecke erreichen, wobei die im Vergleich zur Lichtgeschwindigkeit sehr viel geringere Schallgeschwindigkeit eine kompakte Bauweise mit einer Weglänge von etwa 1 mm ermöglicht.

Infolge dieser Maßnahme unterscheiden sich die Eingangssignale an den Eingängen 31a, 31b bzw. 32a, 32b der Mischer 31, 32 um eine Differenzfrequenz von beispielsweise 1 kHz. Die Signalmischung führt ebenso wie bei der konventionellen Heterodyn-Meßtechnik zu einer Abwärtskonvertierung der Hochfrequenzsignale in den Mischern 31, 32. Infolgedessen können die FD-Parameter bequem bei einer geeigneten relativ niedrigen Frequenz gemessen werden. Die schmalbandigen Bandpaß-Filter 29A, 29B unterdrücken DC-Anteile und die Summensignale aus dem Mischvorgang. In der Meß- und Auswerteeinheit 30 können die Phasenlage sowie die Intensitätsparameter DC und AC mit bekannten meßtechnischen Verfahren, wie sie teilweise auch bei der Heterodyn-Meßtechnik zum Einsatz kommen, ermittelt werden. Geeignet ist insbesondere ein DSP (digital signal processor), der eine über eine Vielzahl von Frequenz-Chirps gemittelte digitalisierte Darstellung des Mischer-Ausgangssignals erzeugt. Dessen Parameter P, AC, DC und auch die Frequenz können mit geläufigen Algorithmen, die in käuflich erhältlichen Meßgeräten dieses Typs implementiert sind, berechnet werden.

Da sich bei der vorliegenden Erfindung innerhalb eines Frequenz-Chirp die Modulationsfrequenz ständig ändert, ist auch die Phasenverschiebung (bei einem gegebenen konstanten Meßsignalweg) nicht konstant. Vielmehr nimmt die Phasendifferenz innerhalb des Frequenz-Chirp mit steigender Frequenz ständig zu bzw. mit abnehmender Frequenz ständig ab. Um die Phasenverschiebung P reproduzierbar messen zu können, ist es deshalb notwendig, innerhalb eines Frequenz-Chirp die Phase jeweils zu einem bestimmten definierten Zeitpunkt zu bestimmen und die so gewonnenen Meßwerte miteinander zu vergleichen. Meßtechnisch einfacher ist ein Differenzprinzip bei dem die Phase zu zwei definierten Zeitpunkten innerhalb des Frequenz-Chirp, insbesondere am Beginn und am Ende des Frequenz-Chirp gemessen und die Differenz dieser Meßwerte weiterverarbeitet wird.

Wie erläutert ist die Verzögerungsstrecke 34 erforderlich, um mit den derzeit realisierbaren Änderungsgeschwindigkeiten des Frequenz-Chirp und bei den für Messungen an biologischen Matrices bevorzugten kurzen Meßabständen eine meßtechnisch praktikable Kreuzkorrelationsfrequenz zu erreichen. Bei großen Meßabständen, wie sie etwa zur Untersuchung von Gehirngewebe oder Vermessungen an technischen Untersuchungsmedien diskutiert werden, kann es jedoch auch möglich sein, ohne Verzögerungsstrecke eine ausreichend hohe Differenzfrequenz an den Mischereingängen zu erreichen.

Unter solchen Meßbedingungen kann es auch möglich sein, statt der Phasenverschiebung P die Differenzfrequenz selbst als Laufzeitparameter zu verwenden. Dies ist bei kurzen Meßabständen nicht möglich, weil beispielsweise die in obiger Beispielsrechnung resultierende Differenzfrequenz von 30 Hz (entsprechend einer Periodendauer von etwa 30 ms) nicht innerhalb eines Frequenz-Chirp von beispielsweise 1 ms Dauer gemessen werden kann. Wenn jedoch durch Erhöhung des Meßabstandes und/oder Verlängerung der Dauer eines Frequenz-Chirp und/oder Erhöhung der Änderungsgeschwindigkeit δf/δt eine Differenzfrequenz erreicht wird, deren korrespondierende Periodendauer kürzer als die Dauer des Frequenz-Chirp ist, bildet die gemessene Differenzfrequenz ein unmittelbares Maß für den Laufzeitunterschied zwischen den Signalwegen.

Soweit zur Anpassung der Differenzfrequenz eine konstante Verzögerungsstrecke 34 erforderlich ist, kann diese wahlweise in einem der beiden zu dem gleichen Signalmischer führenden Signalwege angeordnet sein.

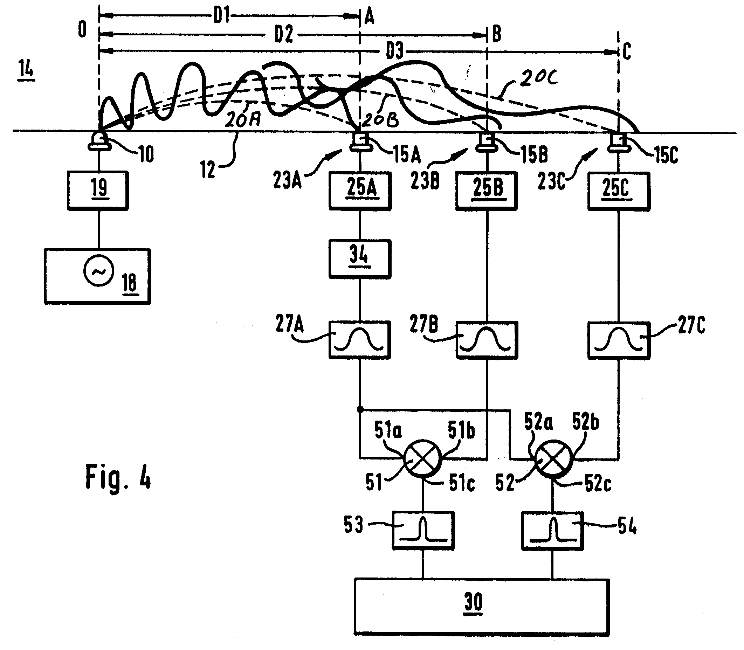

Figur 3 zeigt, daß es im Rahmen der Erfindung auch möglich ist, mit nur einem in dem Medium verlaufenden Lichtwegabschnitt 20 zu arbeiten. Dabei befindet sich in dem Referenzsignalweg 24 eine Verzögerungsstrecke 34, wobei die Signale vor und hinter der Verzögerungsstrecke 34 einem Signalmischer 41 zugeführt werden, dessen Ausgangssignal die Referenzfrequenz für eine frequenzselektive Messung mit Hilfe der Meß- und Auswerteeinheit 30 bildet.

Der Meßsignalweg 23 verläuft wie bei Fig. 2 von dem Frequenzgenerator 18 über einen Verstärker 19 zu dem Lichtsender 10, von dort über den Lichtwegabschnitt 20 zu dem Detektor 15 und weiter zu dem Eingang des Signalmischers 42. Das auf dem in der biologischen Matrix 14 verlaufenden Lichtwegabschnitt 20 zu einem Detektor 15 gelangende Licht wird von einem Verstärker 25 verstärkt und gelangt nach Filterung durch den Filter 27 zu einem Signalmischer 42, an dessen anderem Eingang das Referenzsignal anliegt. Dessen Ausgangssignal wird der Meß- und Auswerteeinheit 30 zugeleitet.

Bei dieser Ausführungsform wird durch den Frequenz-Chirp in Verbindung mit der Verzögerungsstrecke 34 und dem Mischer 41 auf einfacher Weise ein Referenzsignal für die Meß- und Auswerteeinheit 30 und für die Abwärtskonvertierung des Hochfrequenz-Meßsignals erzeugt. Im übrigen entspricht die Meßtechnik weitgehend dem vorbekannten Heterodyn-Verfahren.

Figur 4 zeigt eine Ausführungsform ohne einen Referenzsignalweg. Hier sind mindestens zwei und bevorzugt (wie dargestellt) mindestens drei Detektoren 15A, 15B, 15C vorgesehen, durch die das Sekundärlicht an Meßorten A, B, C detektiert wird, die sich in unterschiedlichen Meßabständen D1, D2, D3 von dem Einstrahlungsort O befinden. Die Einstrahlung erfolgt wie bei Figur 2 mit Hilfe eines Frequenzgenerators 18, eines Verstärkers 19 und eines Lichtsenders 10. Die Signalverarbeitung auf der Sekundärseite der Meßsignalwege erfolgt ebenfalls analog zu Fig. 2 mit Hilfe von Verstärkern 25A, 25B, 25C und Filtern 27A, 27B, 27C.

Auch in diesem Fall wird das Modulationssignal des Frequenzgenerators 18 auf unterschiedlichen Signalwegen mit unterschiedlichen Signallaufzeiten mindestens einem (bei zwei Meßsignalwegen) und im dargestellten bevorzugten Fall zwei Signalmischern 51, 52 zugeführt.

Im Gegensatz zu Fig. 2 haben hier jedoch sämtliche Signalwege 23A, 23B, 23C einen durch die biologische Matrix 14 verlaufenden Meßlichtwegabschnitt 20A, 20B, 20C. Einer dieser Meßsignalwege 23A ist mit einer Verzögerungsstrecke 34 versehen. Das Meßsignal dieses Meßsignalweges wird parallel jeweils einem Eingang 51a, 52a der Signalmischer 51, 52 zugeführt. An dem jeweils anderen Eingang 51b, 52b liegen die Meßsignale der beiden anderen Meßsignalwege 23B, 23C an. Die abwärtskonvertierten Kreuzkorrelationssignale an den Ausgängen 51c, 52c der Mischer 51, 52 werden wiederum über schmalbandige Bandpaß-Filter 53, 54 der Meß- und Auswerteeinheit 30 zugeführt.

Ebenso wie bei der Ausführungsform nach Figur 2 wird bei den Ausführungsformen nach den Figuren 3 und 4 mit Hilfe von bekannten meßtechnischen Verfahren der Kurvenverlauf des Ausgangssignals der Mischer 31, 32, 42, bestimmt und daraus die Phasenlage P sowie die Intensitätsparameter DC und AC ermittelt.

Diese Parameter können dann verwendet werden, um - beispielsweise nach einem der einleitend erläuterten vorbekannten Verfahren - ein gewünschtes Untersuchungsergebnis zu ermitteln. Die Phasenverschiebung kann also beispielsweise bei einem FD-spektroskopischen Verfahren als Maß für die optische Weglänge des Lichts zwischen Einstrahlungsort und Detektionsort verwendet werden. Besonders bevorzugt wird die erfindungsgemäße Meßtechnik bei dem in der PCT/DE 94/01290 beschriebenen Verfahren verwendet, um die Glucosekonzentration zu bestimmen. Auch im Rahmen der eingangs erwähnten bildgebenden Verfahren ist die Erfindung einsetzbar. Bei jedem dieser Verfahren ersetzt die erfindungsgemäße Meßtechnik das vorbekannte Heterodyn-Verfahren und ermöglicht dabei mit verringertem meßtechnischem Aufwand eine vergleichbare Genauigkeit.

Die meßtechnischen Anforderungen des erfindungsgemäßen Verfahren lassen sich mit denen der Heterodyn-Meßtechnik wie folgt vergleichen. Bei der Heterodyn-Technik führt die konstante Modulation mit einer Frequenz von 100 MHz bei einer Ausbreitungsgeschwindigkeit von c/10 zu einer Wellenlänge von 300 mm. Ein Meßabstand von 10 mm entspricht demzufolge einer Phasenverschiebung von 12 Grad (10/300 x 360°). Legt man bei der erfindungsgemäßen Methode die Annahmen des vorstehend diskutierten Zahlenbeispiels zugrunde, so entspricht die Differenzfrequenz von 30 Hz ebenfalls einer Phasendifferenz von 12 Grad zwischen Beginn und Ende des Frequenz-Chirp. Geht man davon aus, daß die biologische Matrix auf ihr Streuverhalten untersucht werden soll und die (insbesondere durch eine Änderung der Glucosekonzentration verursachte) Änderung der mittleren freien Weglänge 1 % (für zwei unterschiedliche Glucosekonzentrationen) beträgt, so ist für beide Verfahren eine Auflösung der Messung des Phasenwinkels von 0,1 Grad erforderlich.

Die Bestimmung der Parameter, insbesondere der Phasendifferenz P des detektierten Lichts in Relation zu dem entsprechenden Parameter des eingestrahlten Lichts setzt selbstverständlich voraus, daß der Meß- und Auswerteeinheit 30 Informationen über Phasenlage bzw. Intensität des von dem Lichtsender 10 in die Matrix 14 eingestrahlten Primärlichts zugeführt werden. Dies ist bei der Ausführungsform gemäß Fig. 3 der Fall. Eine analoge Ergänzung kann beispielsweise auch bei der Ausführungsform gemäß Fig. 2 vorgenommen werden.

Die in Figur 4 dargestellte Ausführungsform ist darauf ausgerichtet, die Differenzen der genannten Parameter zwischen den Detektionsorten A und B bzw. A und C zu bestimmen. Die gemessene Phasendifferenz ist dabei also beispielsweise ein Maß für die Phasendifferenz zwischen dem an diesen Meßorten detektierten Licht. Bei Untersuchungen, die auf der Änderung der Lichtlaufzeit innerhalb der biologischen Matrix beruhen (wie beispielsweise bei der PCT/DE 94/01290) kann eine solche Differenz ebensogut wie die Differenz zu dem Einstrahlungsort als Maß für die Änderung der Lichtlaufzeit verwendet werden.

## Patentansprüche

1. Verfahren zur Untersuchung eines streuenden Mediums, insbesondere einer biologischen Matrix, mit intensitätsmoduliertem Licht,
   bei welchem
   von einem Frequenzgenerator (18) eine hochfrequentes Modulationssignal erzeugt, die Intensität eines Lichtsenders (10) mit dem Modulationssignal moduliert und das von dem Lichtsender (10) ausgehende Licht in das Medium eingestrahlt wird,
   das Modulationssignal Frequenz-Chirps einschließt, während deren die Modulationsfrequenz von einer Anfangsfrequenz zu einer Endfrequenz durchgestimmt wird,
   das Modulationssignal von dem Frequenzgenerator (18) auf mindestens zwei verschiedenen Signalwegen (23A, 24) einem Signalmischer (31) zugeführt wird, so daß sich während eines Frequenz-Chirp die Eingangssignale des Signalmischers (31) um eine Differenzfrequenz unterscheiden, deren Größe von dem Unterschied der Signallaufzeiten auf den mindestens zwei Signalwegen (23A, 24) und der Geschwindigkeit der Änderung der Modulationsfrequenz abhängt, wobei mindestens einer der Signalwege als Meßsignalweg (23A) einen durch das Medium verlaufenden Lichtwegabschnitt (20A) einschließt, und
   das Ausgangssignal des Signalmischers (31) zu einer Information über das streuende Medium weiterverarbeitet wird.

2. Verfahren nach Anspruch 1, bei welchem einer der Signalwege, durch die das Modulationssignal mit unterschiedlichen Signallaufzeiten einem Signalmischer zugeführt wird, ein Referenzsignalweg (24) ist, der keinen durch das Medium verlaufenden Lichtwegabschnitt einschließt.

3. Verfahren nach Anspruch 2, bei welchem das Modulationssignal auf einem zweiten Meßsignalweg (23B) mit einem durch das Medium verlaufenden Lichtwegabschnitt (20B) einem weiteren Signalmischer (32) zugeführt wird, wobei der Lichtwegabschnitt (20B) einen von dem Lichtwegabschnitt (20A) des ersten Meßsignalwegs (23A) verschiedenen Abstand zwischen dem Einstrahlungsort (O) und dem Detektionsort (B) hat, und bei welchem der Referenzsignalweg (24) an den jeweils zweiten Eingang (31b, 32b) beider Signalmischer angeschlossen ist.

4. Verfahren nach Anspruch 1, bei welchem zwei Signalwege (23A, 23B), auf denen die Modulationssignale mit unterschiedlichen Signallaufzeiten einem Signalmischer (51) zugeführt werden, Meßsignalwege mit einem durch das Medium verlaufenden Lichtwegabschnitt (20A, 20B) sind, wobei die Lichtwegabschnitte unterschiedliche Meßabstände (D1, D2) zwischen Einstrahlungsort (O) und Detektionsort (A, B) haben.

5. Verfahren nach Anspruch 4, bei welchem das Modulationssignal auf einem dritten Meßsignalweg (23C), mit einem durch das Medium verlaufenden Lichtwegabschnitt (20C), bei dem der Lichtwegabschnitt (20C) einen dritten Abstand (D3) zwischen Einstrahlungsort und Detektionsort aufweist, einem zweiten Signalmischer (52) zugeführt wird und ein anderer Eingang (52a) des zweiten Signalmischers mit einem der Eingänge (51a) des ersten Signalmischers (51) verbunden ist.

6. Verfahren nach einem der vorhergehenden Ansprüche, bei welchem das Modulationssignal auf einem der Signalwege (24, 23A) durch eine Signalverzögerungsstrecke (34) verzögert wird, um die Differenzfrequenz auf einen Wert zu erhöhen, der in einem vorbestimmten Frequenzbereich liegt.

7. Verfahren nach Anspruch 6, bei welchem die Differenzfrequenz zwischen 1 kHz und 30 kHz liegt.

8. Verfahren nach einem der vorhergehenden Ansprüche, bei welchem das Ausgangssignal des Signalmischers (31, 32, 41, 51, 52) einer Bandpaß-Filterung unterzogen wird, wobei die Zentralfrequenz der Bandpaßfilterung der Differenzfrequenz entspricht.

9. Verfahren nach einem der vorhergehenden Ansprüche, bei welchem das streuende Medium ein biologisches Gewebe ist und die niedrigste Frequenz des Frequenz-Chirps mehr als 50 MHz und die höchste Frequenz des Frequenz-Chirps weniger als 1000 MHz beträgt.

10. Verfahren nach einem der vorhergehenden Ansprüche, bei welchem die Bandbreite des Frequenz-Chirp mindestens 10 MHz und höchstens 300 MHz beträgt.

11. Verfahren nach einem der vorhergehenden Ansprüche, bei welchem die durch Änderungen des mittleren Lichtweges auf dem Lichtwegabschnitt (20A, 20B, 20C) in dem Medium (14) verursachte Änderung der Differenzfrequenz bestimmt und bei der Weiterverarbeitung zu der Information über das streuende Medium verwendet wird.

12. Verfahren nach einem der Ansprüche 1 bis 10, bei welchem eine durch Änderungen des mittleren Lichtweges auf dem Lichtwegabschnitt (20A, 20B, 20C) in dem Medium verursachte Änderung der Phase des amplitudenmodulierten Lichts bestimmt und bei der Weiterverarbeitung zu der Information über das streuende Medium verwendet wird.

13. Verfahren nach einem der vorhergehenden Ansprüche, bei welchem ein Intensitätsparameter des amplitudenmodulierten Lichts bestimmt und bei der Weiterverarbeitung zu der Information über das streuende Medium verwendet wird.

14. Verfahren nach einem der vorhergehenden Ansprüche, bei welchem der Einstrahlungsort, an dem das Licht in das streuende Medium eingestrahlt wird, zur Abtastung eines Volumenbereiches des Mediums variiert und das Ausgangssignal des Mischers zu einer Bildinformation verarbeitet wird.

f(D1)  f(D2)  f(D3)

D3

D2

D1

0          A          B          C          X

## Fig. 1

0  14  20  A

10  12  15

23

19  25

34

24  27

18

41  42

30

## Fig. 3

Fig. 2

EP 0 718 620 A1

Fig. 4

Europäisches
Patentamt

# EUROPÄISCHER RECHERCHENBERICHT

Nummer der Anmeldung

EP 95 11 9424

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 592 200 (HAMAMATSU PHOTONICS K. K.) * das ganze Dokument * --- | 1,2 | G01N21/47 A61B5/00 |
| A | EP-A-0 627 620 (HAMAMATSU PHOTONICS K. K.) * Zusammenfassung; Abbildung 19 * --- | 1-5 | |
| A | US-A-5 213 105 (E. GRATTON ET AL.) * Zusammenfassung * --- | 1,13,14 | |
| A,D | PROCEEDINGS SPIE, Bd. 1888, 1993, Seiten 248-257, XP002000444 A. DUNCAN ET AL.: * Seite 252 * --- | 1 | |
| A | PHYSICS IN MEDICINE AND BIOLOGY, Bd. 39, Nr. 7, Juli 1994, BRISTOL GB, Seiten 1157-1180, XP000454637 B. W. POGUE ET AL.: * Seite 1163 * --- | 1 | |
| A | APPLIED OPTICS, Bd. 33, Nr. 22, 1.August 1994, WASHINGTON DC US, Seiten 5204-5213, XP000462186 S. FANTINI ET AL.: * Zusammenfassung * --- | 1 | RECHERCHIERTE SACHGEBIETE (Int.Cl.6) G01N A61B |
| A D | WO-A-90 09003 (NIM INC.) * das ganze Dokument * & US-A-5 122 974 --- | 1 | |
| A | WO-A-93 09423 (THE GOVERNMENT OF THE UNITED STATES OF AMERICA) * Zusammenfassung * ----- | 1,14 | |

Der vorliegende Recherchenbericht wurde für alle Patentansprüche erstellt

| Recherchenort | Abschlußdatum der Recherche | Prüfer |
|---|---|---|
| BERLIN | 12.April 1996 | Brison, O |

EPO FORM 1503 03.82 (P04C03)